# FASCICULE DE BREVET EUROPEEN

(11) **EP 1 191 205 B1**
(45) Date de publication et mention de la délivrance du brevet: **12.07.2006**
(21) Numéro de dépôt: 01402409.5
(22) Date de dépôt: 20.09.2001
(51) Int. Cl.: F02C 7/045

(54) **Procédé pour l'atténuation des sons d'interaction rotor/stator, dans une turbomachine et dispositif pour la mise en oeuvre de ce procédé**
Verfahren zur Geräuschreduzierung einer Turbomaschine mittels Phasenverschiebung/-auslöschung und Vorrichtung zur Ausführung des Verfahrens
Procedure for noise reduction for a turbo machine using a Phase shift/Phase superposition and method for execution of this procedure

(30) Priorité: 21.09.2000 FR 0012016
(43) Date de publication de la demande: 27.03.2002
(73) Titulaire: SNECMA, 75015 Paris (FR)
(72) Inventeur: Antoine, Angélique Hélène, 91100 Corbeil Essonnes (FR); Bouty, Eric Jean-Louis, 77550 Moissy Cramayel (FR); Thomas, Alain Alphonse Léopold, 77590 Chartrettes (FR)

(56) Documents cités:
- EP-A- 0 899 427
- US-A- 4 199 295
- US-A- 4 255 083

## Description

L'invention concerne l'atténuation des sons produits dans une turbomachine par l'interaction des aubes mobiles d'une couronne d'aubes rotoriques et des aubes fixes d'une couronne d'aubes statoriques, disposée en aval de la couronne d'aubes rotoriques, procédé selon lequel on crée un contre- bruit en opposition de phase au moyen d'une injection de fluide à travers des orifices en nombre égal à celui des aubes fixes de la couronne d'aubes statoriques.

FRA 2 370 170 prévoit les orifices dans le canal d'écoulement en aval de la couronne d'aubes rotoriques, soit devant les aubes fixes soit à l'arrière de ces dernières. Les orifices sont immobiles par rapport au stator, mais le débit de fluide injecté par chaque orifice doit être modulé par une vanne actionnée à la fréquence du son à atténuer.

A chaque orifice est ainsi associée une vanne modulatrice, et toutes les vannes sont commandées par une boite électronique de servocommande ou un appareil électronique du genre magnéto, assurant le déphasage de débit entre les différents orifices.

Le système proposé par FRA 2 370 170 pour atténuer les sons produits par l'interaction des aubes mobiles et des aubes fixes est donc relativement complexe, et par le fait même, susceptible de pannes nombreuses.

L'invention s'est donnée pour but de proposer un procédé d'atténuation des sons produits par l'interaction des aubes mobiles et des aubes fixes situées immédiatement en aval des aubes mobiles qui soit facile à mettre en oeuvre et qui nécessite pour sa mise en oeuvre peu de pièces mobiles.

L'invention concerne également un dispositif pour la mise en oeuvre du procédé.

Le procédé selon l'invention est caractérisé par le fait que l'on injecte le fluide dans le canal d'écoulement en amont de la couronne d'aubes rotoriques sous forme de jets continus à travers les orifices et par le fait que l'on règle la position angulaire des orifices par rapport aux aubes fixes de manière que les ondes acoustiques crées par l'interaction des jets et des aubes mobiles soient sensiblement en opposition de phase avec celles créées par l'interaction des aubes mobiles et des aubes fixes.

Ainsi dans le procédé proposé, il n'y a pas de modulation des débits des jets, car les ondes acoustiques créées par l'interaction des jets et des aubes mobiles sont à la même fréquence que les ondes acoustiques créées par les aubes mobiles et les aubes fixes.

Selon une première variante du procédé, on règle la position angulaire des orifices par rapport aux aubes fixes de manière continue.

Selon une deuxième variante du procédé, on règle la position angulaire des orifices par rapport aux aubes fixes de manière discontinue en fonction du régime moteur.

Lorsque le procédé selon l'invention est appliqué à l'atténuation des sons produits par une soufflante d'un turboréacteur double flux dont le canal d'écoulement est traversé par un pylône et des bras, on calcule la position et le diamètre des orifices d'injection de manière à prendre en compte la distorsion de vitesse créée par le pylône et les bras.

Le dispositif pour la mise en oeuvre du procédé est caractérisé par le fait que les orifices d'injection sont ménagés dans un anneau porté par le carter, ledit anneau étant de révolution autour de l'axe de rotation et étant susceptible de pivoter d'un angle au moins égal au pas angulaire des aubes fixes.

Pour mettre en oeuvre la première variante du procédé, le dispositif comporte en outre un moteur d'entraînement de l'anneau commandé par un contrôleur.

De préférence l'anneau est disposé dans un collecteur annulaire qui présente une fente annulaire en regard des orifices.

Pour mettre en oeuvre la deuxième variante du procédé, l'anneau est disposé dans un collecteur qui présente en regard du chemin des orifices et par pas angulaire des aubes fixes une pluralité de trous répartis ayant un diamètre au moins égal au diamètre de l'orifice correspondant.

Le dispositif comporte en outre des moyens pour positionner les orifices devant un jeu de trous en fonction du régime moteur.

D'autres avantages et caractéristiques de l'invention ressortiront à la lecture de la description suivante faite à titre d'exemple et en référence aux dessins annexés dans lesquels:
la figure 1 représente schématiquement une demi-section axiale d'un moteur selon l'invention,
la figure 2 montre avec plus de détail le dispositif selon l'invention,
la figure 3 est une vue de face de l'anneau tournant,
la figure 4 est une vue de face d'une variante de réalisation de l'invention, et
la figure 5 montre en développement un pas interaube du collecteur et de l'anneau tournant selon la variante de réalisation de la figure 4.

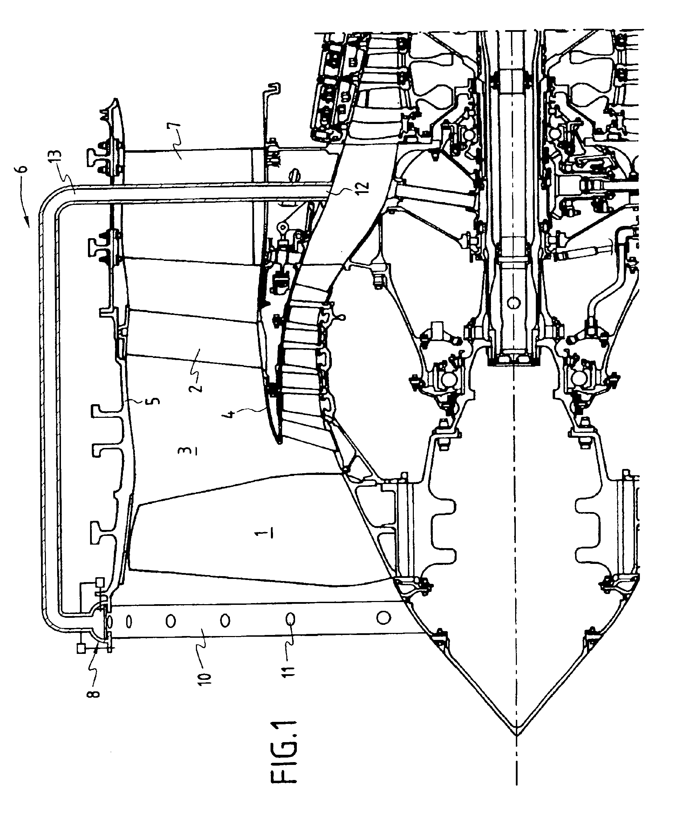

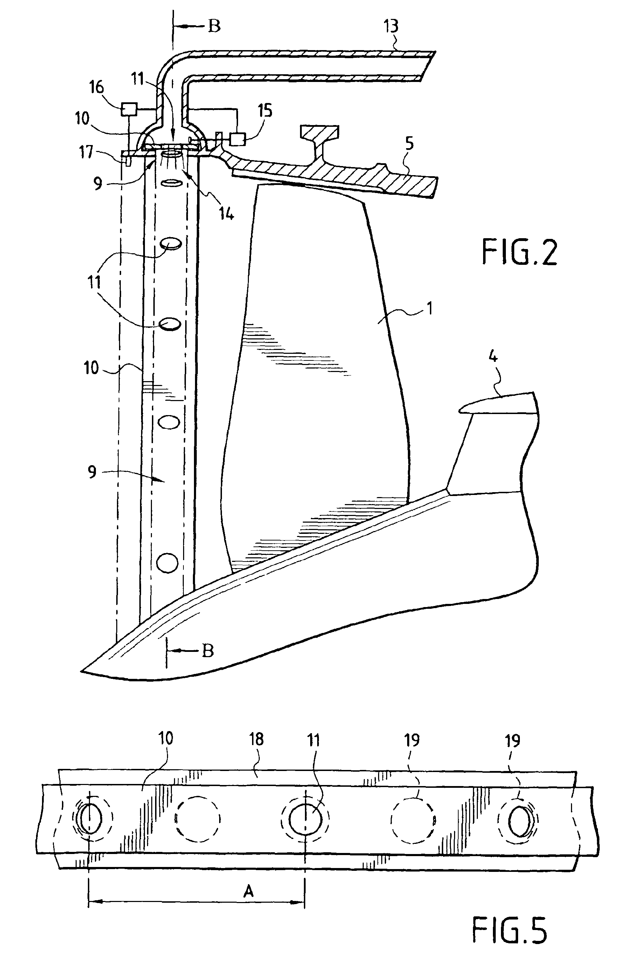

Les figures 1 à 3 montrent un exemple de réalisation de l'invention appliqué à un turboréacteur d'aviation à deux flux et on cherche à atténuer le bruit produit par l'interaction des aubes mobiles 1 de soufflante avec les aubes fixes 2 d'un redresseur placées en aval des aubes mobiles 1 de la soufflante dans le canal d'écoulement 3 du flux secondaire dit froid. Le canal d'écoulement 3 est annulaire et délimité intérieurement par un carter moteur 4 et extérieurement par la paroi interne 5 d'un carter extérieur 6. Des bras de support 7 radiaux relient le carter moteur 4 au carter extérieur 6.

Le carter extérieur 6 comporte en amont des aubes fixes 2, un collecteur torique 8 présentant du côté du canal d'écoulement 3 une fente annulaire 9. Un anneau 10 est monté de manière étanche dans le collecteur torique 8. Cet anneau 10 comporte en regard de la fente 9 des orifices 11 en nombre égal au nombre d'aubes fixes 2 et qui sont régulièrement répartis autour de l'axe de rotation de la soufflante. Le collecteur 8 est alimenté en air sous pression par de l'air prélevé au flux primaire par des prises 12, via des conduits 13 passant en partie dans les bras de support 7.

Ainsi lorsque le turboréacteur est en fonctionnement, des débits d'air 14 sont injectés par les orifices 11 dans le canal d'écoulement 3 en aval des aubes mobiles 1. Il se crée ainsi des ondes acoustiques par interaction des jets 14 avec les aubes mobiles 1 qui ont une fréquence égale à la fréquence des ondes acoustiques produites par l'interaction des aubes mobiles 1 avec les aubes fixes 2.

Un moteur 15 commandé par un contrôleur 16 relié à un microphone 17, peut faire pivoter l'anneau 10 d'un angle A au moins égal au pas angulaire séparant deux aubes fixes 2 consécutives.

On conçoit que si on fait pivoter l'anneau 10 de cet angle, les ondes acoustiques créées par l'interaction des jets 14 et des aubes mobiles 1 subissent un déphasage de 2π. Ainsi il existe toujours une position angulaire de l'anneau 10 dans laquelle les ondes acoustiques créées par l'interaction des jets 14 avec les aubes mobiles 1 est en opposition de phase avec les ondes acoustiques créées par interaction des aubes mobiles 1 avec les aubes fixes 2, à l'arrière des aubes mobiles 1.

Dans cette position optimale le bruit produit par l'interaction des aubes mobiles 1 et des aubes fixes est atténué à l'arrière de la soufflante.

La pression de l'air injecté est déterminée expérimentalement selon les conditions de vol ou de régime moteur.

Dans le cas où l'invention est appliquée à une turbomachine traditionnelle qui ne comporte pas de bras de support 7 dans le canal d'écoulement 3, les orifices 11 sont équirépartis et sont identiques.

Dans le cas d'une soufflante de turboréaction, la position et le diamètre des orifices 11 sont calculés de manière à prendre également en compte la distorsion de vitesse créée par les bras de support 7 et éventuellement le pylône.

Dans l'exemple décrit ci dessus, le réglage de la position angulaire de l'anneau 10 par rapport au collecteur 8, est réalisé de manière continue par le contrôleur 16, en fonction du signal fourni par le microphone 17.

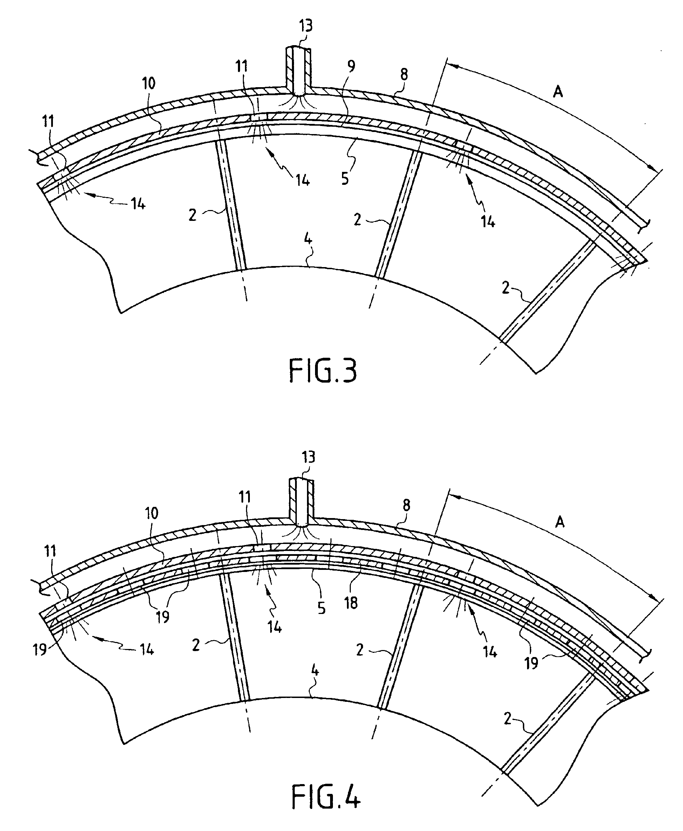

Les figures 4 et 5 montrent une variante de réalisation de l'invention. La paroi 18 radialement intérieure du collecteur torique 8 présente par pas angulaire A une pluralité de trous 19 régulièrement répartis, en lieu et place de la fente annulaire 9 décrite ci-dessus. Ces trous 19 ont un diamètre égal au moins au diamètre de l'orifice 11 ayant le plus grand diamètre.

Les orifices 11 de l'anneau 10 peuvent être positionnés devant un jeu de trous 19 en fonction du régime moteur du turboréacteur.

L'anneau 9 est également entraîné en rotation autour de l'axe de rotation de la soufflante par un moteur 15 commandé par un contrôleur 16 qui reçoit des signaux d'un dispositif électronique de contrôle du régime moteur.

## Revendications

1. Procédé d'atténuation des sons produits dans une turbomachine par l'interaction des aubes mobiles (1) d'une couronne d'aubes rotoriques et des aubes fixes (2) d'une couronne d'aubes statoriques, disposée en aval de la couronne d'aubes rotoriques, procédé selon lequel on crée un contre-bruit en opposition de phase au moyen d'une injection de fluide dans le canal de l'écoulement (3) à travers des orifice(11) en nombre égal à celui des aubes fixes (2) de la couronne d'aubes statoriques, **caractérisé par le fait que** l'on injecte le fluide dans le canal d'écoulement (3) en amont de la couronne d'aubes rotoriques sous forme de jets continus (14) à travers les orifices (11) et **par le fait que** l'on règle la position angulaire des orifices (11) par rapport aux aubes fixes (2) de manière que les ondes acoustiques créées par l'interaction des jets (14) et des aubes mobiles (1) soient sensiblement en opposition de phase avec celles créées par l'interaction des aubes mobiles (1) et des aubes fixes.

2. Procédé selon la revendication 1, **caractérisé par le fait que** l'on règle la position angulaire des orifices (11) par rapport aux aubes fixes (2) de manière continue.

3. Procédé selon la revendication 1, **caractérisé par le fait que** l'on règle la position angulaire des orifices (11) par rapport aux aubes fixes (2) de manière discontinue en fonction du régime moteur.

4. Procédé selon l'une quelconque des revendications 1 à 3, appliqué à l'atténuation des sons produits par une soufflante d'un turboréacteur double flux dont le canal d'écoulement (3) est traversé par des bras de support (7), **caractérisé par le fait que** l'on calcule la position et le diamètre des orifices (11) d'injection de manière à prendre en compte la distorsion de vitesse créée par les bras de support (7).

5. Dispositif pour la mise en oeuvre du procédé selon l'une des revendications précédentes, **caractérisé par le fait que** les orifices (11) d'injection sont ménagés dans un anneau (10) porté par le carter, ledit anneau (10) étant de révolution autour de l'axe de rotation du rotor et étant susceptible de pivoter d'un angle (A) au moins égal au pas angulaire des aubes fixes (2).

6. Dispositif selon la revendication 5, **caractérisé par le fait qu'**il comporte en outre un moteur d'entraînement (15) de l'anneau (10) commandé par un contrôleur (16).

7. Dispositif selon la revendication 6, **caractérisé par le fait que** l'anneau (10) est disposé dans un collecteur annulaire (8) qui présente une fente annulaire (9) en regard des orifices (11)

8. Dispositif selon la revendication 5, **caractérisé par le fait que** l'anneau (10) est disposé dans un collecteur (8) qui présente en regard du chemin des orifices (11) et par pas angulaire A des aubes fixes (2) une pluralité de trous (19) répartis ayant un diamètre au moins égal au diamètre de l'orifice (11) correspondant.

9. Dispositif selon la revendication 8, **caractérisé par le fait qu'**il comporte en outre des moyens (15) pour positionner les orifices (11) devant un jeu de trous (19) en fonction du régime moteur.

## Claims

1. Method of attenuating sound produced in a turbomachine by the interaction between the moving blades (1) of a ring of rotor blades and the fixed blades (2) of a ring of stator blades which is arranged downstream of the ring of rotor blades, in which method a counter-noise in phase opposition is created by means of injecting fluid into the flow duct (3) through orifices (11) whose number is equal to that of the fixed blades (2) of the ring of stator blades, **characterized in that** the fluid is injected into the flow duct (3) upstream of the ring of rotor blades in the form of continuous jets (14) through the orifices (11), and **in that** the angular position of the orifices (11) is adjusted with respect to the fixed blades (2) so that the acoustic waves created by the interaction between the jets (14) and the moving blades (1) are substantially in phase opposition with those created by the interaction between the moving blades (1) and the fixed blades.

2. Method according to Claim 1, **characterized in that** the angular position of the orifices (11) is adjusted continuously with respect to the fixed blades (2).

3. Method according to Claim 1, **characterized in that** the angular position of the orifices (11) is adjusted discontinuously with respect to the fixed blades (2) as a function of the engine speed.

4. Method according to any one of Claims 1 to 3, applied to the attenuation of sound produced by a fan of a bypass jet engine whose flow duct (3) is traversed by support arms (7), **characterized in that** the position and the diameter of the injection orifices (11) are calculated in such a way as to take account of the velocity distortion created by the support arms (7).

5. Device for implementing the method according to one of the preceding claims, **characterized in that** the injection orifices (11) are formed in a ring (10) borne by the casing, the said ring (10) being axisymmetrical about the axis of rotation of the rotor and being able to pivot through an angle (A) at least equal to the angular pitch of the fixed blades (2).

6. Device according to Claim 5, **characterized in that** it additionally comprises a motor (15) for driving the ring (10), this motor being controlled by a controller (16).

7. Device according to Claim 6, **characterized in that** the ring (10) is arranged in an annular manifold (8) which has an annular slot (9) opposite the orifices (11).

8. Device according to Claim 5, **characterized in that** the ring (10) is arranged in a manifold (8) which has, opposite the path of the orifices (11) and per angular pitch A of the fixed blades (2), a plurality of distributed holes (19) having a diameter at least equal to the diameter of the corresponding orifice (11).

9. Device according to Claim 8, **characterized in that** it additionally comprises means (15) for positioning the orifices (11) in front of a set of holes (19) as a function of the engine speed.

## Patentansprüche

1. Verfahren zur Dämpfung von Geräuschen, die in einem Turbotriebwerk durch die Wechselwirkung der bewegbaren Schaufeln (1) eines Rotorschaufelkranzes mit den feststehenden Schaufeln (2) eines hinter dem Rotorschaufelkranz angeordneten Statorschaufelkranzes erzeugt werden, wobei nach diesem Verfahren mittels Einspritzens eines Fluids in den Strömungskanal (3) durch Öffnungen (11) hindurch, deren Anzahl gleich der der feststehenden Schaufeln (2) des Statorschaufelkranzes ist, ein Gegengeräusch in entgegengesetzter Phase geschaffen wird,
**dadurch gekennzeichnet,**
**dass** das Fluid in Form von kontinuierlichen Strahlen (14) durch die Öffnungen (11) hindurch vor dem Rotorschaufelkranz in den Strömungskanal (3) eingespritzt wird, und dass die Winkelstellung der Öffnungen (11) zu den feststehenden Schaufeln (2) dergestalt geregelt wird, dass die durch die Wechselwirkung der Strahlen (14) mit den bewegbaren Schaufeln (1) erzeugten akustischen Wellen im Wesentlichen die entgegengesetzte Phase zu den durch die Wechselwirkung der bewegbaren Schaufeln (1) mit den feststehenden Schaufeln erzeugten haben.

2. Verfahren nach Anspruch 1,
**dadurch gekennzeichnet,**
**dass** die Winkelstellung der Öffnungen (11) zu den feststehenden Schaufeln (2) kontinuierlich geregelt wird.

3. Verfahren nach Anspruch 1,
**dadurch gekennzeichnet,**
**dass** die Winkelstellung der Öffnungen (11) zu den feststehenden Schaufeln (2) nicht kontinuierlich als Funktion der Motordrehzahl geregelt wird.

4. Verfahren nach einem der Ansprüche 1 bis 3, das zur Dämpfung von Geräuschen angewendet wird, die von einem Gebläse eines Zweikreis-TL-Triebwerks erzeugt werden, durch dessen Strömungskanal (3) hindurch sich Tragarme (7) erstrecken,
**dadurch gekennzeichnet,**
**dass** die Position und der Durchmesser der Einspritzöffnungen (11) dergestalt berechnet werden, dass dabei die durch diesen Tragarm (7) bewirkte Änderung der Geschwindigkeit berücksichtigt wird.

5. Vorrichtung für den Einsatz des Verfahrens nach einem der vorherigen Ansprüche,
**dadurch gekennzeichnet,**
**dass** die Einspritzöffnungen (11) in einem am Gehäuse sitzenden Ring (10) ausgeführt sind, wobei dieser Ring (10) um die Drehachse des Rotors umlaufend und um einen Winkel (A) schwenkbar, der mindestens gleich dem Teilungswinkel der feststehenden Schaufeln (2) ist, vorgesehen ist.

6. Vorrichtung nach Anspruch 5,
**dadurch gekennzeichnet,**
**dass** sie ferner einen Antriebsmotor (15) für den Ring (10) aufweist, der durch ein Steuergerät (16) gesteuert wird.

7. Vorrichtung nach Anspruch 6,
**dadurch gekennzeichnet,**
**dass** der Ring (10) in einer ringförmigen Sammelleitung (8) angeordnet ist, die gegenüber den Öffnungen (11) einen ringförmigen Schlitz (9) aufweist.

8. Vorrichtung nach Anspruch 5,
**dadurch gekennzeichnet,**
**dass** der Ring (10) in einer Sammelleitung (8) angeordnet ist, die gegenüber der Bahn der Öffnungen (11) und mit einem Teilungswinkel A der feststehenden Schaufeln (2) eine Vielzahl von verteilt angeordneten Löchern (19) aufweist, deren Durchmesser mindesten gleich dem Durchmesser der entsprechenden Öffnung (11) ist.

9. Vorrichtung nach Anspruch 8,
**dadurch gekennzeichnet,**
**dass** sie ferner Mittel (15) aufweist, um in Abhängigkeit von der Motordrehzahl die Öffnungen (11) vor einer Gruppe von Löchern (19) zu positionieren.
